# EUROPÄISCHE PATENTSCHRIFT

(11) **EP 2 762 015 B1**
(45) Veröffentlichungstag und Bekanntmachung des Hinweises auf die Patenterteilung: **18.04.2018**
(21) Anmeldenummer: 14150214.6
(22) Anmeldetag: 06.01.2014
(51) Int. Cl.: A24C 5/34, G01N 22/04, A24D 3/02

(54) **Anordnung und Verfahren zur Überprüfung von stabförmigen Artikeln der Tabak verarbeitenden Industrie**
Assembly and method for examining rod-shaped articles from the tobacco processing industry
Système et procédé de contrôle d'articles en forme de tige de l'industrie de traitement du tabac

(30) Priorität: 30.01.2013 DE 102013201511
(43) Veröffentlichungstag der Anmeldung: 06.08.2014
(73) Patentinhaber: Hauni Maschinenbau GmbH, 21033 Hamburg (DE)
(72) Erfinder: Kirchenstein, Robert, 22043 Hamburg (DE); Hebels, Albert-Berend, 21037 Hamburg (DE); Leifels, Tobias, 20535 Hamburg (DE); Hohenstein, Norbert, 21481 Lauenburg (DE); Baron, Denis, 24233 Schwentinental (DE)
(74) Vertreter: Seemann & Partner Patentanwälte mbB

(56) Entgegenhaltungen:
- EP-A1- 1 321 049
- EP-A1- 1 467 191
- EP-A1- 2 243 384
- WO-A1-2004/005903
- WO-A1-2014/005677
- US-A1- 2004 017 207

## Beschreibung

Die Erfindung betrifft eine Anordnung zur Überprüfung von stabförmigen Artikeln der Tabak verarbeitenden Industrie, insbesondere zur Bestimmung eines Flüssigkeitsgehalts von Kapseln in Filtern von Filterzigaretten, mit wenigstens einer Muldenfördervorrichtung mit Mulden zur Aufnahme und queraxialen Förderung von stabförmigen Artikeln und wenigstens einer Mikrowellenmessvorrichtung mit wenigstens einem Mikrowellenresonator, sowie eine Maschine der Tabak verarbeitenden Industrie, insbesondere Filteransetzmaschine, mit einer entsprechenden erfindungsgemäßen Anordnung.

Die Erfindung betrifft ferner ein Verfahren zur Überprüfung von stabförmigen Artikeln der Tabak verarbeitenden Industrie, insbesondere zur Bestimmung eines Flüssigkeitsgehalts von Kapseln in Filtern von Filterzigaretten, insbesondere in einer erfindungsgemäßen Anordnung, wobei stabförmige Artikel, insbesondere Filterzigaretten, in Mulden wenigstens einer Muldenfördervorrichtung queraxial an wenigstens einer Mikrowellenmessvorrichtung mit wenigstens einem Mikrowellenresonator vorbei gefördert werden.

Bislang werden in einigen Filterstrangmaschinen, wie beispielsweise in der so genannten KDF der Anmelderin, Filterstäbe hergestellt, in die Objekte, beispielsweise geschmacksflüssigkeitsgefüllte Kapseln, eingelegt werden. Direkt während der Produktion werden diese Kapseln vor weiterer Verarbeitung geprüft, wobei insbesondere auch Mikrowellen-Sensoren wie die MIDAS-EF und MIDAS-EFX der Anmelderin zur Anwendung kommen. Dabei wird geprüft, ob der Füllgehalt der Kapseln korrekt ist oder ob diese zerbrochen sind, ob Kapseln fehlen, ob doppelte Kapseln eingelegt sind und ob die Position in der Strangrichtung korrekt ist.

In einigen Fällen werden die so produzierten Filterstäbe für eine gewisse Zeit, beispielsweise 24 Stunden, gelagert und anschließend entlang einer pneumatischen Förderstrecke noch einmal auf ihren Füllgehalt bzw. darauf, ob sie zerbrochen sind, geprüft. Dies geschieht beispielsweise in der mit "FDU" bezeichneten Anlage der Anmelderin, um auszuschließen, dass an der Filterstrangherstellungsmaschine Kapseln beschädigt worden sind, die erst nach einiger Zeit auslaufen und nur im ausgetrockneten Zustand vom Mikrowellen-Sensor als fehlerhaft detektiert werden.

Demgegenüber liegt der vorliegenden Erfindung die Aufgabe zugrunde, sicherzustellen, dass die Qualität der stabförmigen Artikel der Tabak verarbeitenden Industrie nach der vollständigen Bearbeitung sichergestellt wird.

Diese Aufgabe wird durch eine Anordnung zur Überprüfung von stabförmigen Artikeln der Tabak verarbeitenden Industrie, insbesondere zur Bestimmung eines Flüssigkeitsgehalts von Kapseln in Filtern von Filterzigaretten, mit wenigstens einer Muldenfördervorrichtung mit Mulden zur Aufnahme und queraxialen Förderung von stabförmigen Artikeln und wenigstens einer Mikrowellenmessvorrichtung mit wenigstens einem Mikrowellenresonator, gelöst, die dadurch weitergebildet wird, dass eine oder mehrere Muldenfördervorrichtungen als Muldentrommel oder als Muldenkegeltrommel ausgebildet ist oder sind und der wenigstens eine Mikrowellenresonator wenigstens eine seitliche Öffnung aufweist und zur wenigstens einen Muldenfördervorrichtung so angeordnet ist, dass stabförmige Artikel auf ihrem Förderweg auf der wenigstens einen Muldenfördervorrichtung an einer Stelle einer größten Annäherung an oder eines größten Eintritts in die wenigstens eine seitliche Öffnung sich in einem Wirkbereich eines im Mikrowellenresonator erzeugten Mikrowellenmessfelds befinden, wobei die stabförmigen Artikel bei Durchtritt durch das Mikrowellenmessfeld im Wesentlichen quer zu ihrer Längsachse mit dem Mikrowellenmessfeld beaufschlagt sind.

Damit ist es möglich, die fertigen Produkte, also insbesondere Filterzigaretten mit Kapselfiltern, nach ihrer Herstellung und vor ihrer Verpackung noch einmal zu überprüfen. Dazu erfolgt die Überprüfung auf einer Muldenfördervorrichtung, auf der die fertigen Produkte noch einmal überprüft werden.

Die Überprüfung findet wiederum mit Mikrowellen statt. Anders als bei den Messvorrichtungen der MIDAS-Serie der Anmelderin handelt es sich bei den Mikrowellenresonatoren gemäß der Erfindung jedoch nicht um zylindrische Resonatorgehäuse bzw. Resonatoren, durch die Filterstäbe oder ein Filterstrang in längsaxialer Richtung gefördert zentral durchbewegt werden, sondern es werden Mikrowellenresonatoren verwendet, die eine seitliche Öffnung aufweisen, so dass auch queraxial geförderte stabförmige Produkte bzw. Artikel damit überprüfbar sind. Da die Überprüfung insbesondere die Überprüfung der Kapseln in einem Filter betrifft, ist erfindungsgemäß vorgesehen, dass die stabförmigen Artikel quer zu ihrer Längsachse mit dem Mikrowellenmessfeld beaufschlagt sind. Dies bedeutet, dass eine seitliche bzw. radial gerichtete Messung stattfindet und nicht eine Messung an der Stirnfläche des Artikels.

Da die erfindungsgemäße Anordnung eine Messung an einer Muldenfördervorrichtung vorsieht, wird jeder einzelne Artikel erfindungsgemäß überprüft und nicht nur stichprobenartig einzelne ausgeschleuste Artikel.

Um vorzugsweise die Mikrowellenmessung möglichst wenig zu stören, werden "low-loss"-Kunststoffe und/oder -Keramiken in der Muldenfördervorrichtung verwendet, an der die Mikrowellenmessung erfolgt, beispielsweise als Trommelmaterial in einer Muldentrommel.

Zur Herstellung einer größeren Redundanz oder mehrerer unabhängiger Messwerte ist vorzugsweise vorgesehen, dass an der wenigstens einen Muldenfördervorrichtung und/oder an wenigstens einer zweiten Muldenfördervorrichtung wenigstens eine weitere Mikrowellenmessvorrichtung angeordnet ist, wobei die Mikrowellenmessvorrichtungen zum Betrieb mit der gleichen oder mit verschiedenen Mikrowellenfrequenzen vorgesehen und/oder ausgebildet sind. Die verschiedenen Messwerte können auch dazu verwendet werden, eine Position einer Kapsel in einem Filter genau zu bestimmen, und zwar sowohl in queraxialer als auch in längsaxialer Richtung, wenn diese beiden oder mehr Mikrowellenmessvorrichtungen bzw. deren Mikrowellenresonatoren in Bezug auf eine Kapselsollposition voneinander beabstandet angeordnet sind.

In einer vorteilhaften Weiterbildung ist vorgesehen, dass wenigstens zwei Mikrowellenresonatoren in längsaxialer Richtung der stabförmigen Artikel nebeneinander oder versetzt zueinander angeordnet sind. Die Versetzung in längsaxialer Richtung der stabförmigen Artikel bedeutet, dass zwei Mikrowellenresonatoren beispielsweise in Längsrichtung des Artikels vor und hinter einer Kapselsollposition angeordnet sein können, so dass durch eine Art Differenzmessung die längsaxiale Position der Kapsel im Filter oder eine Abweichung von der Sollposition festgestellt werden kann. Die Summe der beiden Messsignale kann einen Aufschluss über einen Füllungsgrad und/oder einen Beschädigungszustand der Kapsel liefern. Bei der Differenz bzw. Additionsbildung sind nichtlineare Effekte des Mikrowellenfeldes zu berücksichtigen wie beispielsweise gegebenenfalls eine nichtlineare Abhängigkeit des Signals vom Abstand zwischen Objekt und Öffnung des Mikrowellenresonators.

In einer weiteren, zusätzlichen oder alternativen Weiterbildung führt der Förderweg entlang wenigstens zwei Mikrowellenresonatoren, die auf verschiedenen Seiten der stabförmigen Artikel angeordnet sind. Damit wird jeder Filter von zwei verschiedenen Seiten überprüft, so dass es möglich ist festzustellen, ob eine Kapsel beispielsweise außerhalb der zentralen Sollposition in radialer Richtung verschoben oder versetzt im Filter angeordnet ist. Auch hier kann eine auf Nichtlinearitäten der Messung angepasste Differenzbildung und/oder Additionsbildung erfolgen.

Vorzugsweise ist der wenigstens eine oder wenigstens ein Mikrowellenresonator als offener Koaxialresonator, als Helix-Mikrowellenresonator, als Zweispiegel-Resonator oder als im Wesentlichen U-förmiger Resonator mit seitlicher Öffnung im Mittelteil ausgebildet. Dies sind Beispiele von seitlich offenen Mikrowellenresonatoren. Bei Vorrichtungen mit zwei oder mehr Mikrowellenresonatoren sollte wenigstens einer der Mikrowellenresonatoren, vorzugsweise zwei oder alle entsprechend ausgebildet sein. Zur Verbesserung der Vergleichbarkeit der Messungen sind die mehreren Mikrowellenresonatoren gleichartig ausgebildet.

Dabei ist ein offener Koaxialresonator ein länglich-zylindrischer Resonator mit einem zentralen Leiter, wobei eine der beiden Zylinderendflächen offen ist und die andere metallisch geschlossen ist und das im Resonator erzeugte Mikrowellenfeld an der offenen Seite bzw. Zylinderendfläche oder Zylinderendöffnung als seitlicher Öffnung austritt. Dabei sind die Feldlinien des elektromagnetischen Mikrowellenfeldes besonders im Bereich der Spitze des zentralen Leiters stark gebündelt, so dass hier eine hohe Empfindlichkeit für ein stark absorbierendes Medium wie die Flüssigkeit einer Kapsel vorherrscht. Ein Helix-Mikrowellenresonator weist zusätzlich eine Helix-Wendel um die zentrale Säule des Resonators auf. Hiermit können hohe Gütefaktoren des Resonators erzielt werden, die zu einer hohen Detektionsschärfe führen. Dies macht es möglich, einen entsprechenden Sensor an einer Kopfabtasttrommel einer Filteransetzmaschine zu montieren. Eine bevorzugte Betriebsfrequenz eines Helixresonators liegt zwischen 4 und 7 GHz, insbesondere zwischen 5 und 6 GHz.

Zur Vermeidung von Verschmutzungen kann der Resonator, insbesondere der offene Koaxialresonator oder der Helix-Mikrowellenresonator, allerdings auch mit einer für Mikrowellen durchlässigen Kappe abgedeckt sein.

Ein Zweispiegel-Resonator umfasst zwei einander gegenüberliegende Spiegel, von denen wenigstens einer ein Hohlspiegel ist, wobei sich zwischen den Spiegeln ein resonantes Mikrowellenfeld ausbildet. Dieser Zweispiegel-Resonator ist geometrisch ähnlich zu einem Resonator für optische Gaslaser. Der zweite Spiegel kann ein Hohlspiegel sein, kann aber auch plan oder unter gewissen Umständen konvex sein.

Ein im Wesentlichen U-förmiger Resonator oder auch Hufeisenresonator ist ein gekrümmter Mikrowellen-Hohlleiter mit abgeschlossenen Enden und einem üblicherweise rechteckigen Querschnitt, dessen Mittelteil, also dem mittleren Bogen des "U", eine seitliche Öffnung aufweist. Diese Öffnung ist so positioniert und dimensioniert, dass das Mikrowellenfeld nicht wesentlich ausleckt. Die Öffnung folgt außerdem der Krümmung des Trommelumlaufs in dem Fall, dass die Muldenfördervorrichtung als Muldentrommel ausgebildet ist.

Erfindungsgemäß ist oder sind eine oder mehrere Muldenfördervorrichtungen als Muldentrommel oder als Muldenkegeltrommel ausgebildet, insbesondere unter Verwendung von low-loss-Kunststoff oder low-loss-Kunststoffen und/oder low-loss-Keramik oder low-loss-Keramiken. Muldenkegeltrommeln können alternativ zu den üblicherweise verwendeten Muldentrommeln vorteilhaft eingesetzt werden für Filterzigaretten, in denen im Filter eine Kapsel in einer Kapselkammer frei beweglich angeordnet ist. Solche Kapseln haben während ihrer Förderung üblicherweise keine definierte Position, sondern können sich an einer beliebigen Stelle innerhalb der Kapselkammer befinden, so dass kein reproduzierbares Messergebnis erreicht wird. Bei der Förderung auf einer Muldenkegeltrommel bewirken die schräg wirkenden Fliehkräfte allerdings, dass die Kapseln sich in einer äußersten Ecke der Kapselkammer anordnen und somit eine reproduzierbare Position im Filter einnehmen. Dies führt zu reproduzierbaren und vergleichbaren Messergebnissen.

In einer besonders einfachen Ausbildung der erfindungsgemäßen Anordnung ist vorgesehen, dass die stabförmigen Artikel in ihren Mulden abschnittsweise über die Muldenfördervorrichtung überstehend angeordnet sind und mit ihrem überstehenden Abschnitt in das Mikrowellenmessfeld eintreten. Bei überstehend angeordneten Artikeln ist es möglich, einen Mikrowellenresonator innerhalb oder außerhalb des Förderwegs bzw. der gekrümmten Förderbahn an der Muldenfördervorrichtung anzuordnen und das überstehende Ende beispielsweise in ein Mikrowellenfeld eintauchen zu lassen.

Vorzugsweise ist vorgesehen, dass wenigstens ein seitlich offener Mikrowellenresonator innerhalb einer gekrümmten Förderbahn der stabförmigen Artikel angeordnet ist und/oder wenigstens ein seitlich offener Mikrowellenresonator außerhalb einer gekrümmten Förderbahn der stabförmigen Artikel angeordnet ist, wobei die gekrümmte Förderbahn durch die Anordnung der Muldenfördervorrichtung vorgegeben ist. Ein Mikrowellenresonator kann auch innerhalb des Förderwegs angeordnet sein, ohne dass die Artikel über die Muldenfördervorrichtung überstehen, wenn die Muldenfördervorrichtung an der Stelle, an der beispielsweise die Kapseln sitzen sollen, eine Öffnung aufweisen zum Austritt oder Durchtritt eines Mikrowellenmessfeldes.

In einer vorteilhaften Ausbildung weist ein Mikrowellenresonator wenigstens zwei einander gegenüberliegende Mikrowellen spiegelnde Flächen auf, von denen eine Fläche konvex ist und die gegenüberliegende Fläche konvex, plan oder konkav ist, wobei in beiden Flächen jeweils eine Öffnung zur Ein- oder Ausleitung von Mikrowellen angeordnet ist oder in eine der beiden Flächen eine Öffnung zur Einleitung und eine Öffnung zur Ausleitung von Mikrowellen angeordnet sind. Die Öffnungen zum Einleiten bzw. zum Ausleiten von Mikrowellen sind derart dimensioniert, dass die Mikrowellen auch hindurchtreten können. Es bildet sich zwischen den beiden Spiegeln ein resonantes Mikrowellenfeld aus, das eine hohe Energiedichte und -güte aufweist und zum Messen von beispielsweise Kapseleigenschaften gut geeignet ist.

In diesem Fall ist es vorteilhaft, wenn eine der beiden spiegelnden Flächen auf oder an der Muldenfördervorrichtung angeordnet ist, wobei stabförmige Artikel abschnittsweise auf der spiegelnden Fläche angeordnet sind, wobei eine andere, konvexe, spiegelnde Fläche feststehend außerhalb der Muldenfördervorrichtung angeordnet ist, wobei insbesondere die auf oder an der Muldenförderrichtung angeordnete spiegelnde Fläche wenigstens in einer Richtung konvex ausgebildet ist, wobei insbesondere die konvexe spiegelnde Fläche konzentrisch oder koaxial mit einer Rotationsachse der Muldenfördervorrichtung ausgebildet ist, wobei insbesondere ein Umfangsstreifen der Muldenfördervorrichtung als durchgängige spiegelnde Fläche ausgebildet ist. Wenn die spiegelnde Fläche auf der Muldenfördervorrichtung angeordnet ist, ist es vorteilhaft, wenn die Mulden nicht Teil der spiegelnden Fläche sind, sondern durch Aufsetzer auf der spiegelnden Fläche gebildet werden, die die stabförmigen Artikel seitlich halten und eine Mulde für die stabförmigen Artikel bilden, wobei diese Aufsätze aus einem für das Mikrowellenmessfeld durchlässigen Material bestehen.

Wenn die spiegelnde Fläche den kompletten Umfang der Muldenfördervorrichtung umschließt, befindet sich zwischen dem äußeren Spiegel und der spiegelnden Fläche auf der Muldenfördervorrichtung ein ununterbrochenes Mikrowellenmessfeld.

Die der Erfindung zugrunde liegende Aufgabe wird auch durch eine Maschine der Tabak verarbeitenden Industrie, insbesondere einer Filteransetzmaschine, mit einer erfindungsgemäßen, zuvor beschriebenen Anordnung gelöst.

Ferner wird die der Erfindung zugrunde liegende Aufgabe durch ein Verfahren zur Überprüfung von stabförmigen Artikeln der Tabak verarbeitenden Industrie, insbesondere zur Bestimmung eines Flüssigkeitsgehalts von Kapseln in Filtern von Filterzigaretten, insbesondere in einer zuvor beschriebenen erfindungsgemäßen Anordnung, gelöst, wobei stabförmige Artikel, insbesondere Filterzigaretten, in Mulden wenigstens einer Muldenfördervorrichtung, die als Muldentrommel oder als Muldenkegeltrommel ausgebildet ist, queraxial an wenigstens einer Mikrowellenmessvorrichtung mit wenigstens einem Mikrowellenresonator vorbei gefördert werden, das dadurch weitergebildet ist, dass der wenigstens eine Mikrowellenresonator wenigstens eine seitliche Öffnung aufweist und die stabförmigen Artikel auf ihrem Förderweg auf der wenigstens einen Muldenfördervorrichtung an einer Stelle einer größten Annäherung an oder eines größten Eintritts in die wenigstens eine seitliche Öffnung einen Teil eines im Mikrowellenresonator erzeugten Mikrowellenmessfelds durchlaufen, wobei die stabförmigen Artikel bei Durchtritt durch das Mikrowellenmessfeld im Wesentlichen quer zu ihrer Längsachse mit dem Mikrowellenmessfeld beaufschlagt werden.

Vorteilhafterweise wird ein Messsignal der wenigstens einen Mikrowellenmessvorrichtung auf das Vorhandensein und/oder eine Befüllung einer Kapsel in einem Filter ausgewertet.

Vorzugsweise werden Messsignale von wenigstens zwei Mikrowellenmessvorrichtungen, die die Artikel von verschiedenen Seiten quer zur Längsachse der Artikel her mit einem Mikrowellenmessfeld beaufschlagen, auf eine Positionierung einer Kapsel in einem Filter, insbesondere eine Exzentrizität einer Kapselposition, ausgewertet. Dies geschieht wie zuvor im Rahmen der Beschreibung der erfindungsgemäßen Anordnung beschrieben.

Ebenfalls vorteilhafterweise werden Messsignale von wenigstens zwei Mikrowellenmessvorrichtungen, die in längsaxialer Richtung der Artikel versetzt voneinander angeordnet sind, auf eine Positionierung von Kapseln in längsaxialer Richtung im Filter und/oder eine Befüllung der Kapseln ausgewertet, insbesondere durch Vergleich, Differenzbildung und/oder Summenbildung der Messsignale.

Das erfindungsgemäße Verfahren ist in selbstlernenden Systemen einsetzbar, bei denen Grenzwerte für ordnungsgemäße Füllobjekte, beispielsweise Kapseln, für jede Produktion angepasst werden. So kann anhand beispielsweise der ersten 10 bis 50 Zigaretten zunächst ein erster Bereich für Grenzwerte festgelegt werden und anschließend ein laufendes Mittel über beispielsweise 500 bis 1000 Zigaretten verwendet werden, um die Grenzwerte laufend anzupassen. Damit kann normalen Variationen in der Produktion Rechnung getragen werden, ohne die Fähigkeit einzubüßen, tatsächlich fehlerhafte Zigaretten zu erkennen und zu entfernen. Auch die Kalibrierung der Messvorrichtungen kann entsprechend selbstlernend ausgestaltet sein.

Die zu den einzelnen Erfindungsgegenständen, also der Anordnung, der Maschine und dem Verfahren, genannten Merkmale, Vorteile und Eigenschaften gelten ohne Einschränkung auch für die aufeinander bezogenen anderen Erfindungsgegenstände.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen schematischen, aus dem Stand der Technik bekannten Verlauf einer Filterherstellung und Überprüfung,
- Fig. 2a), b): schematische Darstellungen von erfindungsgemäßen Anordnungen,
- Fig. 3a), b): schematische Darstellungen von erfindungsgemäßen Anordnungen,
- Fig. 4: eine schematische Darstellung eines offenen Koaxialresonators,
- Fig. 5: den Frequenzverlauf einer Mikrowellenresonanz in einem Resonator,
- Fig. 6: eine schematische Detaildarstellung einer erfindungsgemäßen Anordnung,
- Fig. 7: einen Signalverlauf,
- Fig. 8: eine schematische Darstellung einer erfindungsgemäßen Anordnung im Querschnitt,
- Fig. 9: eine schematische Darstellung einer weiteren erfindungsgemäßen Anordnung im Querschnitt,
- Fig. 10: eine schematische Darstellung im Querschnitt einer erfindungsgemäßen Anordnung mit einem Spiegelresonator,
- Fig. 11: eine schematische Darstellung einer weiteren erfindungsgemäßen Anordnung mit einem Spiegelresonator,
- Fig. 12: eine Detaildarstellung eines Teils des Resonators aus Fig. 11,
- Fig. 13: eine schematische Darstellung einer Muldenkegeltrommel,
- Fig. 14: eine weitere schematische Darstellung einer Muldenkegeltrommel,
- Fig. 15: eine schematische Perspektivdarstellung einer erfindungsgemäßen Anordnung mit einem Hufeisenresonator,
- Fig. 16: eine schematische Perspektivdarstellung einer weiteren erfindungsgemäßen Anordnung mit einem Hufeisenresonator,
- Fig. 17: eine schematische Ansicht eines erfindungsgemäß eingesetzten Helix-Mikrowellenresonators,
- Fig. 18: eine weitere schematische Ansicht des Helix-Mikrowellenresonators aus Fig. 17 und
- Fig. 19: eine schematische perspektivische Ansicht des Helix-Mikrowellenresonators aus Fig. 17 und Fig. 18.

In den Zeichnungen sind jeweils gleiche oder gleichartige Elemente und/oder Teile mit denselben Bezugsziffern versehen, so dass von einer erneuten Vorstellung jeweils abgesehen wird.

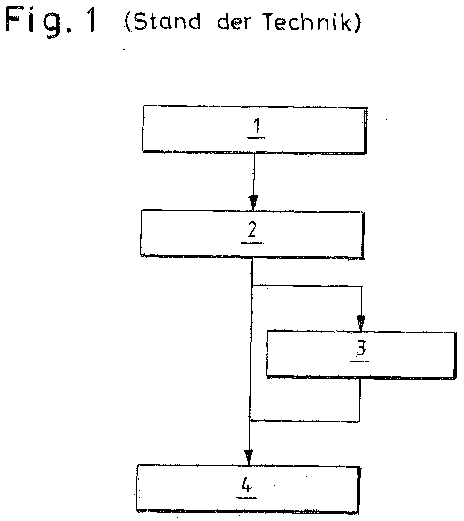

In Fig. 1 ist schematisch dargestellt, wie Filterstäbe mit Geschmackskapseln bislang hergestellt und überprüft werden. Im Verfahrensschritt 1 werden Filterstäbe mit Geschmackskapseln auf einer Filterstrangvorrichtung, beispielsweise mit einem Filterstrang aus Azetat, hergestellt, beispielsweise auf einer Filterstrangmaschine gemäß der von der Anmelderin vertriebenen KDF. Direkt während der Produktion werden diese vor weiterer Verarbeitung mittels Mikrowellensensoren, beispielsweise der MIDAS-EF oder MIDAS-EFX der Anmelderin, daraufhin geprüft, ob Kapseln fehlen, eine doppelte Anzahl an einer Stelle eingebracht ist, ob eine Kapsel an falscher Position ist, ob eine Kapsel gebrochen ist oder einen irregulären Füllgehalt aufweist.

Anschließend werden die Kapseln optional und kundenabhängig 24 Stunden oder mehr gelagert und in einem Verfahrensschritt 2 in einer pneumatischen Fördervorrichtung, beispielsweise gemäß der "FDU" (Filter Detection Unit) der Anmelderin, die beispielsweise in der deutschen Patentanmeldung DE 10 2009 017 962 A1 der Anmelderin beschrieben ist, noch einmal überprüft. Hierbei werden wiederum der Füllgehalt und der Zerbrochen-Status geprüft, da an der Filterstrangmaschine Kapseln leicht beschädigt werden können, die erst nach einiger Zeit auslaufen und somit erst später im ausgetrockneten Zustand vom Mikrowellensensor als fehlerhaft detektiert werden können. Auch diese Mikrowellenvorrichtung entspricht beispielsweise der MIDAS-EF, also einem zylindrischen Mikrowellenresonator mit zentralem Durchgang für längsaxial geförderte Filterstäbe, wie er beispielsweise aus DE 198 54 550 B4 bekannt ist.

Optional erfolgt in einem Verfahrensschritt eine Multifilterherstellung, bei der kapselgefüllte Filterstopfen mit anderen Filterstopfen zusammen zu einem Multifilterstab zusammengestellt werden. Auch hier können die Kapseln beschädigt werden und gegebenenfalls über eine längere Zeit austrocknen.

In einigen Fällen ist aus Mangel an entsprechenden Einrichtungen beim Hersteller die Prüfung im Verfahrensschritt 2 nicht möglich.

Nach dem Verfahrensschritt 2 und optional dem Verfahrensschritt 3 wird in einem Verfahrensschritt 4 auf einer Filteransetzmaschine, beispielsweise der unter der Bezeichnung "PROTOS" der Anmelderin vertriebenen Maschine, der jeweilige Filter mit einem Tabakstab zusammengestellt und verbunden. An dieser Stelle und später erfolgt derzeit keine Prüfung der kapselbesetzten Filter. Es besteht allerdings eine gewisse Wahrscheinlichkeit, dass auch während der Zigarettenherstellung und in folgenden Verarbeitungsschritten Kapseln beschädigt werden, so dass diese auslaufen und beim Endkunden keinen Geschmackseffekt entfalten und es somit zu Reklamationen kommt. Dieses Risiko steigt mit Zunahme der Verarbeitungsschritte, wie zum Beispiel bei der Herstellung und Weiterverarbeitung von Multifiltern.

Eine Prüfung auf einer Zigarettenmaschine am letztmöglichen Prüfzeitpunkt vor dem Verpacken gibt es derzeit nicht. Die MIDAS-Messvorrichtungen mit zentral durchsetzten zylindrischen Resonatoren gemäß beispielsweise DE 198 54 550 B4 sind hierzu auch nicht eingerichtet.

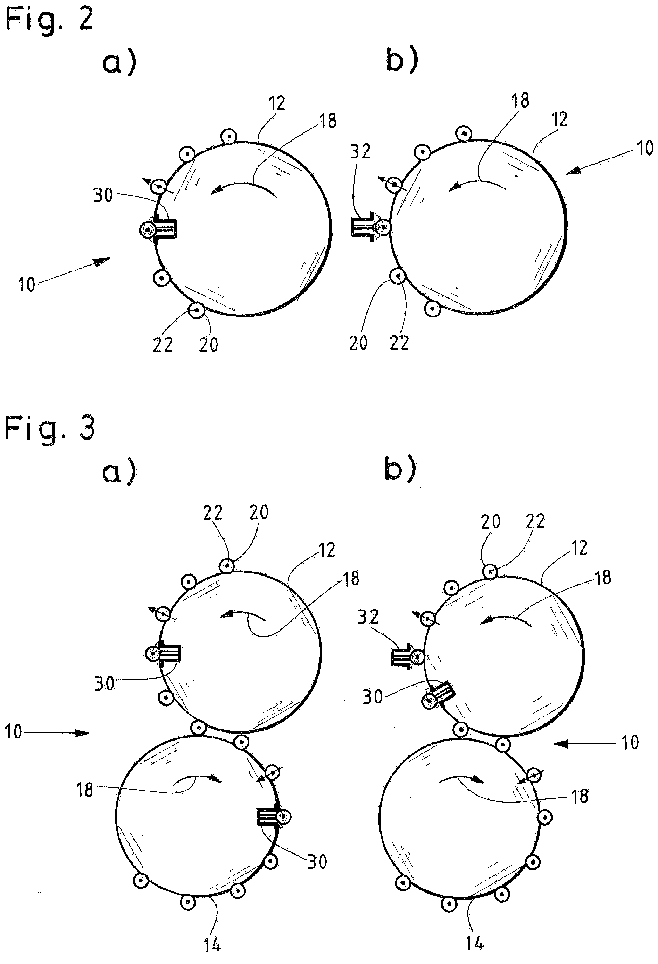

In Fig. 2a) und 2b) sind zwei einfache Ausführungsbeispiele erfindungsgemäßer Anordnungen 10 dargestellt, wobei Filterzigaretten mit Filtern 20 und darin angeordneten Kapseln 22 in Mulden einer Muldentrommel 12 in Förderrichtung 18 gefördert werden. Die Muldentrommel 12 kann aus Metall, Kunststoff, Keramik oder einer Kombination aus diesen Materialien bestehen, wenn dieses zur Reflektionsminderung oder Signaldämpfung des austretenden Mikrowellenfeldes erforderlich ist. Dazu ist in Fig. 2a) schematisch dargestellt, dass ein offener Koaxialresonator 30 von innerhalb der an dieser Stelle kreisförmigen Förderbahn die Filter 20 mit einem austretenden Mikrowellenmessfeld beaufschlagt. In Fig. 2b) ist der offene Koaxialresonator 32 außerhalb der kreisförmigen Förderbahn angeordnet und misst somit von der entgegengesetzten Seite.

In Fig. 3a) und 3b) sind zwei Konfigurationen von weiteren erfindungsgemäßen Anordnungen 10 dargestellt, die jeweils zwei Muldentrommeln 12, 14 aufweisen. Jede der beiden Anordnungen 10 weist dabei zwei offene Koaxialresonatoren 30, 32 auf, wobei die beiden Koaxialresonatoren 30 in Fig. 3a) jeweils von innen bezüglich der Kreisbahnen messen. Dies jedoch an zwei aufeinander folgenden Muldentrommeln 12, 14. Alternativ hierzu kann eine zweifache Messung von außen statt von innen erfolgen. Jeweils oberhalb der beiden Koaxialresonatoren 30 in Fig. 3a) ist ein Filter 20 mit einem Pfeil, der eine Orientierung darstellt, gezeigt. Auf der Muldentrommel 12 weist dieser Pfeil radial nach außen. In dieser Orientierung wird der Filter 20 durch den ersten offenen Koaxialresonator 30 gemessen. Nach der Übergabe ist die Orientierung in radialer Richtung umgedreht, durch den zweiten radialen Pfeil auf der zweiten Muldentrommel 14 gezeigt, so dass die Messung in der entgegengesetzten Richtung zur ersten Messung erfolgt.

In Fig. 3b) ist die Orientierung der Filter 20 wiederum durch jeweils einen Pfeil an einem Filter 20 an der ersten Muldentrommel 12 und der zweiten Muldentrommel 14 dargestellt. Im Unterschied zur Anordnung 10 gemäß Fig. 3a) wird bei der Anordnung 10 gemäß Fig. 3b) jedoch zweimal an der ersten Muldentrommel 12 gemessen, wobei ein offener Koaxialresonator 32 zunächst außerhalb der Förderbahn und anschließend stromabwärts ein weiterer offener Koaxialresonator 30 innerhalb der Förderbahn 18 angeordnet ist, so dass wiederum jeder Filter 20 von zwei verschiedenen Seiten her gemessen wird.

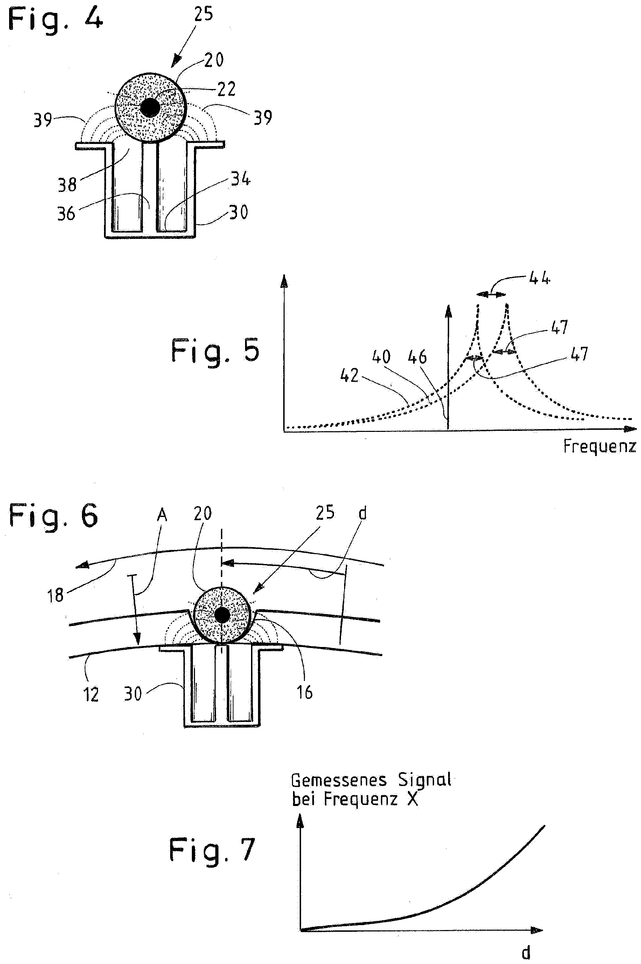

In Fig. 4 ist ein offener Koaxialresonator 30 im größeren Detail schematisch im Querschnitt dargestellt. Der offene Koaxialresonator 30 ist im Querschnitt zylindrisch und weist einen Boden 34 sowie einen zentralen Leiter 36 auf. Über eine oder zwei Einkopplungsgeometrien, beispielsweise Antennen, wird elektrisch oder magnetisch das Mikrowellenfeld im Resonatorhohlraum ein- und ausgekoppelt. Die Endfläche gegenüber dem Boden 34 ist offen mit einer Öffnung 38, aus der ein Mikrowellenmessfeld 39 austritt, das an der Stelle des Austritts des zentralen Leiters 36 besonders stark gebündelt ist. In Fig. 4 ist außerdem dargestellt, dass sich ein Filter 20 mit einer Kapsel 22 gerade zentral über der Öffnung 38 des Koaxialresonators 30 befindet und somit das Mikrowellenfeld 39 maximal durch die Anwesenheit der flüssigkeitsgefüllten Kapsel 22 in der Zigarette 25 beeinflusst wird.

In Fig. 5 ist der Frequenzverlauf des resonanten Mikrowellenfeldes in dem Resonator dargestellt. Die Resonanzkurve 40 stellt den Fall ohne anwesende Kapsel dar. Die Resonanzkurve 42 zeigt den Fall mit anwesender Kapsel 22. Es zeigt sich, dass das Resonanzmaximum um eine Resonanzverschiebung 44 verschoben ist und bei niedrigeren Frequenzen die Resonanzkurve 42 oberhalb der Resonanzkurve 40 liegt. Die tatsächlich verwendete Messfrequenz 46 liegt auf der unteren Flanke der Resonanzkurven 40, 42. Eine weitere Möglichkeit ist die Messung der Änderung der Güte 47, ersichtlich aus der Änderung der Breite der Resonanz, und der Resonanzfrequenzverschiebung 44.

In Fig. 6 ist die Kombination aus Filter 20 und offenem Koaxialresonator 30 gemäß Fig. 4 im Zusammenhang mit der Muldentrommel 12 gezeigt. Der stillstehende Koaxialresonator 30 ist unterhalb des Filters 20 angeordnet, der in einer Mulde 16 der Muldentrommel 12 angeordnet ist. Die Förderrichtung 18 ist ebenfalls dargestellt. Dies bedeutet, dass in Fig. 6 der Filter 20 sich von rechts kommend in Förderrichtung 18 zunächst an die seitliche Öffnung des Koaxialresonators 30 annähert, in der in Fig. 6 gezeigten Position die größte Annäherung erfährt und bei weiterer Förderung in Förderrichtung 18 sich wieder von der Öffnung des Koaxialresonators 30 entfernt. Ebenfalls eingezeichnet sind mit Pfeilen einerseits die Distanz d als Beschreibung des Weges, den der Filter 20 auf seinem Förderweg zurücklegt, bis zur größten Annäherung an den offenen Koaxialresonator 30, dessen Mittelachse gestrichelt dargestellt ist, sowie andererseits der radiale Abstand A vom Trommelumfang an der Stelle, an der der Koaxialresonator 30 seine Öffnung hat. Je kleiner der Abstand A zwischen dem high-loss-Objekt Kapsel 22 und dem Koaxialresonator 30 ist, desto größer wird das gemessene Signal.

In Fig. 7 ist die erste Hälfte des Signals an der Messfrequenz 46 aus Fig. 5 bezogen auf einen in Förderrichtung bewegten Kapselfilter bezogen auf die Distanz d vom Koaxialresonator 30 gemäß Fig. 6 gezeigt, wobei die Steigerung des gemessenen Signals bei der Messfrequenz aus der Zunahme der Menge an Material, sowohl Azetat als auch Flüssigkeit in der Kapsel vor dem Messfeldbereich des Sensors bei der Annäherung resultiert. Den größten Einfluss hat hierbei das so genannte "High-Loss"-Material der Kapsel. Das Filtermaterial hat weniger Effekt auf das Messsignal. Derselbe Kurvenverlauf ergibt sich bei Annäherung des Kapselfilters oder nur der Kapsel an den Resonator. Je kleiner der Abstand von der Oberfläche des Resonators ist, desto größer ist der Signalausschlag und je größer die Menge, d.h. der Befüllungsgrad, ist, desto größer ist ebenfalls der Signalausschlag.

Wenn davon ausgegangen wird, dass die Kapsel innerhalb des Filters immer im Zentrum des Querschnitts liegt oder zumindest nur sehr gering in der Positionsschwankung ist, genügt es, einen solchen Resonator senkrecht zum Umlauf der Zigaretten zu platzieren. Dabei kann der Resonator innen oder außen platziert werden, wobei wichtig ist, dass die Zigaretten im konstanten Abstand zur Resonator-Oberfläche geführt werden. Dies erfolgt beispielsweise gemäß Fig. 6.

Der seitlich offene Koaxialresonator 30, 32 besitzt den Vorteil, dass das zu messende Material nicht durch den Resonator, sondern an dessen Oberfläche vorbeigeführt wird, wie in den Figuren 2 bis 6 gezeigt. Eine Durchführung der Zigarette in Längsrichtung der Zigarette ist auf der Trommel bzw. der Muldenfördervorrichtung nicht mehr möglich, da die Zigaretten vereinzelt in den Mulden 16 liegen.

Werden in dem Mikrowellenfeld die Position und Lage einer Kapsel relativ zur Resonatoroberfläche und an einem bestimmten Messpunkt verändert, verändern sich in dem angeregten schwingenden System die Resonanzfrequenz und die Dämpfung und Güte gemäß Fig. 5. Beide Größen können analog, wie im bisherigen MIDAS-System, beispielsweise mittels Leistungs-Verlust-Amplitude und erster Ableitung an einer festgelegten Messfrequenz ermittelt und ausgewertet werden. Dabei kann eine Durchgangsmessung S₂₁ bzw. eine Reflektionsmessung S₁₁ verwendet werden. Auch eine Messung nach dem Resonanzfolgeverfahren, die als Reflektionsmessung aufgebaut ist, ist erfindungsgemäß möglich.

Der Resonator in Fig. 6 kann auf die Trommel gerichtet oder aber auch in oder unter einer Aussparung der Trommel platziert sein und die Filterenden der Zigaretten werden beispielsweise freiliegend über der Trommelkante am Resonator 30 vorbeigeführt. Auch ein dünner Kunststoffring, beispielsweise aus PEEK (Polyetheretherketon), der die Trommelaussparung überragt, zwischen dem Filter und dem Resonator 30, der mit der Trommel rotiert und vor Verschmutzung schützt und gegebenenfalls die Filterlage stabilisiert, ist erfindungsgemäß möglich.

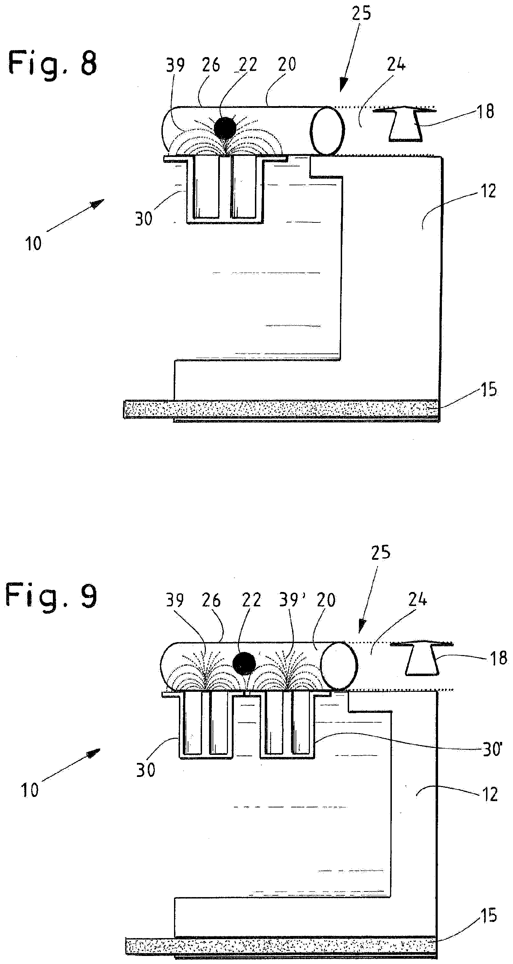

In den Fig. 8 und 9 sind schematisch zwei Querschnittsdarstellungen durch erfindungsgemäße Anordnungen 10 mit innenliegenden offenen Koaxialresonatoren 30 gezeigt. Es ist jeweils eine Hälfte einer Muldentrommel 12 gezeigt, die um eine zentrale Drehachse 15 rotiert. An ihrer Oberfläche weist sie eine Mulde auf, in der eine Zigarette 25 mit einem Tabakstock 24 und einem über den Rand der Muldentrommel 12 hinausragenden Filter 20 angeordnet ist. Der Filter 20 umfasst eine Kapsel 22. An der Stelle, an der die Kapsel 22 im Filter 20 angeordnet sein soll, ist an einer Stelle des Umlaufs der Muldentrommel 12 in Fig. 8 ein Koaxialresonator 30 dargestellt, dessen austretendes Mikrowellenfeld 39 so angeordnet ist, dass die Kapsel 20 in ihrer Idealposition genau durch den empfindlichsten Teil des Mikrowellenfeldes 39, dargestellt durch die dichteste Anordnung von Feldlinien, gefördert wird. Hiermit lässt sich insbesondere der Kapselzustand sehr genau messen. Die Förderrichtung 18 in die Sichtebene hinein ist durch einen Pfeil dargestellt.

In Fig. 9 ist abweichend von Fig. 8 eine Anordnung mit zwei offenen Koaxialresonatoren 30, 30', die in längsaxialer Richtung der Zigarette 25 nebeneinander bzw. hintereinander angeordnet sind, dargestellt. Dabei sind die beiden Koaxialresonatoren 30, 30' im Wesentlichen symmetrisch um die Idealposition der Kapsel 22 im Filter angeordnet. Wie in Fig. 8, so ist auch in Fig. 9 ein überstehender Abschnitt 26 vorgesehen, der an den Öffnungen der Koaxialresonatoren 30, 30' vorbeigeführt wird.

Da die beiden Koaxialresonatoren 30, 30' im Wesentlichen symmetrisch um die Soll-Kapselposition angeordnet sind, wird eine Kapselfehlposition dazu führen, dass entweder das Mikrowellenfeld 39 oder das Mikrowellenfeld 39' mehr von der Kapsel 22 sieht und somit stärker beeinflusst wird. Die Differenz dieser Signale, korrigiert um die Nichtlinearität des Messsignals, gibt Aufschluss über das Ausmaß der Verschiebung der Kapsel 20 von der idealen gewünschten Kapselposition. Die Addition der Messergebnisse gibt nach entsprechender Korrektur wiederum Aufschluss über den Zustand der Kapsel, beispielsweise, ob die Kapsel ausgelaufen oder anderweitig beschädigt ist.

Beispielsweise können aus mehreren Resonatoren die Längsposition, die axiale Position senkrecht zum Sensor und der Füllungsgrad der Kapsel bestimmt werden. Falls die einzelnen Signale außerdem über die Zeit bezogen auf den Drehwinkel der Trommel aufgezeichnet werden, so kann auch die Lage der Kapsel im kompletten dreidimensionalen Raum des Filterstabes bestimmt werden.

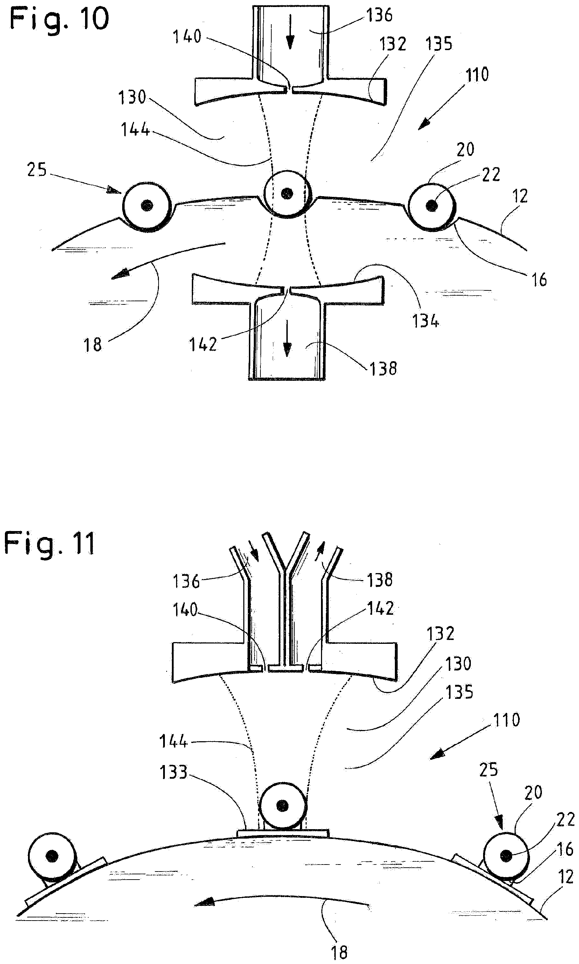

Die Fig. 10 und 11 zeigen zwei schematische Querschnitte durch alternative erfindungsgemäße Anordnungen 110. Wie zuvor werden Zigaretten mit Filtern 20 mit Kapseln 22 in Mulden 16 einer Muldentrommel 12 in Förderrichtung 18 durch einen Mikrowellenresonator 130 gefördert. Bei dem Mikrowellenresonator 130 gemäß Fig. 10 handelt es sich um einen Spiegelresonator mit zwei konkaven Spiegeln 132, 134, wobei der konkave Spiegel 132 außerhalb der Förderbahn und der konkave Spiegel 134 innerhalb der Förderbahn liegt. Der konkave Spiegel 132 weist eine Öffnung 140 auf, durch die ein durch eine Mikrowellenzuleitung 136 zugeführtes Mikrowellenfeld in den Resonator zwischen den beiden Spiegeln 132, 134 gelangt. Ebenso weist der zweite Spiegel 134 eine Öffnung 142 auf, durch die das Mikrowellenfeld durch die Mikrowellenableitung 138 wiederum austreten kann. Die Öffnungen 140, 142 sind in Fig. 10 nicht notwendigerweise maßstabsgerecht gezeigt, sondern sind derart dimensioniert, dass sie ein Hindurchtreten des Mikrowellenfeldes zulassen. Zwischen den beiden in Fig. 10 als Hohlkugelflächenspiegel ausgebildeten Spiegeln 132, 134 bildet sich ein so genanntes gaußsches Strahlprofil des resonanten Mikrowellenfeldes 144 aus, wobei der Förderweg der Filter 20 durch die zentrale Einschnürung des gaußschen Strahlprofils führt und somit zu einer besonders sensiblen Messung der Kapseln führt.

In Fig. 11 ist eine alternative Ausführungsform beschrieben, bei der der obere Spiegel 132 sowohl eine Zuleitung 136 als auch Ableitung 138 an der entsprechenden Öffnung 140, 142 aufweist. Der untere Spiegel 133 ist im Ausführungsbeispiel gemäß Fig. 11 plan dargestellt und reflektiert das gaußsche Strahlprofil des Mikrowellenfeldes 144 an dessen engster Einschnürung. Die Filter 20 sind in Mulden 16 auf dem planen Spiegel gehaltert, wobei das Material der Mulden 16 für die Mikrowellenstrahlung im Wesentlichen transparent ist.

Der Spalt zwischen den beiden Spiegeln 132, 133 in Fig. 11 bzw. 132, 134 in Fig. 10 bildet jeweils eine seitliche Öffnung 135, durch die die geförderten Filter an den Zigaretten 25 in das jeweilige Mikrowellenfeld 144 eintreten.

Anstelle eines planen Spiegels 133 kann der Spiegel 133 gemäß Fig. 11 auch konkav oder konvex ausgebildet sein. Eine Ausbildung als konvexer Spiegel hat den Vorteil, dass insbesondere bei einer Ausbildung, in der der Krümmungsradius des konvexen Spiegels dem Krümmungsradius der Muldentrommel an dieser Stelle entspricht, sich das resonante Mikrowellenfeld 144 für die gesamte Dauer aufbaut, während sich der Spiegel 133 im Bereich des gaußschen Strahlprofils des Mikrowellenfeldes 144 befindet. Diese Bedingung ist für plane oder konkave Spiegel 133 in der Anordnung 130 gemäß Fig. 11 nur für eine kurze Zeit erfüllt.

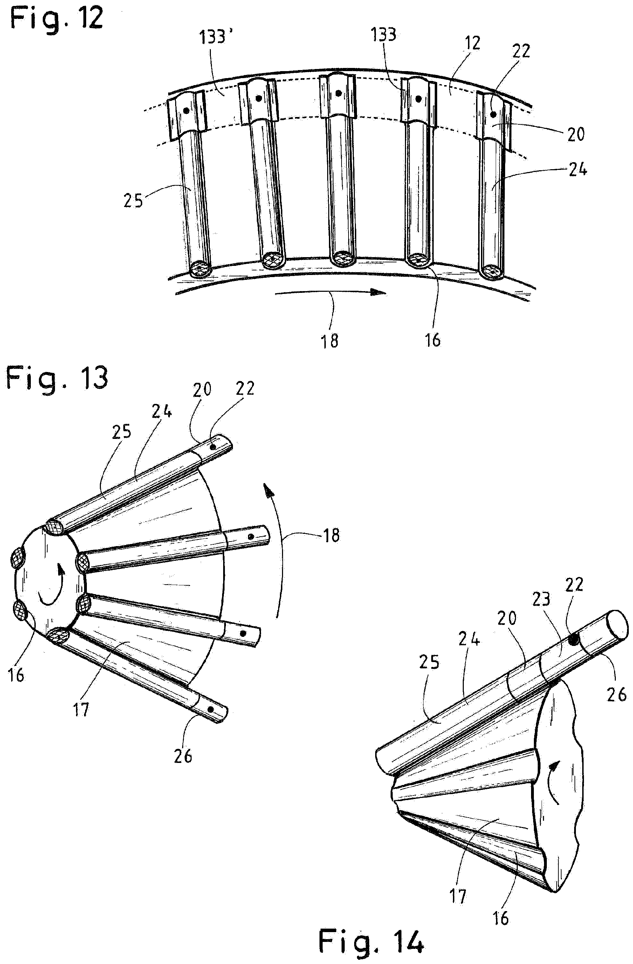

In Fig. 12 ist eine Draufsicht auf die Muldentrommel 12 der Anordnung 130 gemäß Fig. 11 stärker im Detail dargestellt. Die Oberfläche der Muldentrommel 12 weist Mulden 16 zur Aufnahme der Zigaretten 25 auf. An der Stelle der Filter 20 mit den Kapseln 22 sind die Mulden erweitert und weisen die planen Spiegel 133 auf, die sich etwas seitlich der Filter 20 erstrecken.

Anstelle der einzelnen Spiegel 133 kann auch ein durchgehender Streifen vorhanden sein, der die Muldentrommel 12 ringförmig umspannt und eine durchgehende konvexe Spiegelfläche bildet. Dies ist gestrichelt optional dargestellt. Dieser Spiegelring ist mit dem Bezugszeichen 133' versehen.

In Fig. 13 ist eine als Muldenkegeltrommel 17 dargestellte Muldenfördervorrichtung dargestellt mit Zigaretten 25 in den Mulden 16 der Muldenkegeltrommel 17. Auch hier stehen die Filter 20 in einem überstehenden Abschnitt 26 über der Muldenkegeltrommel 17 ab, so dass diese überstehenden Abschnitte 26 separat durch Mikrowellenmessvorrichtungen bzw. Mikrowellenresonatoren einer Überprüfung ausgesetzt werden können.

In Fig. 14 ist ein Sonderfall dargestellt, bei dem die Zigarette 25 in dem Filter 20 eine Kapselkammer 23 für die Kapsel 22 aufweist, in der die Kapsel 22 frei beweglich ist. Die Kapselkammer 23 ist insofern hohl. Durch die Schrägstellung der Zigarette in der Mulde 16 der Muldenkegeltrommel 17 wird bei Rotation eine Fliehkraft in einer schrägen Richtung bezüglich der Längsachse der Zigarette 25 ausgeübt, so dass sich die Kapsel 22 an der in Fig. 14 dargestellten Position an der hinteren Wand und an der Außenfläche bezüglich der Rotationsachse anordnet und somit eine reproduzierbare Position einnimmt. Auf diese Weise ist es möglich, auch bei Zigaretten 25 mit Kapselkammern 23 die Kapseln zu untersuchen.

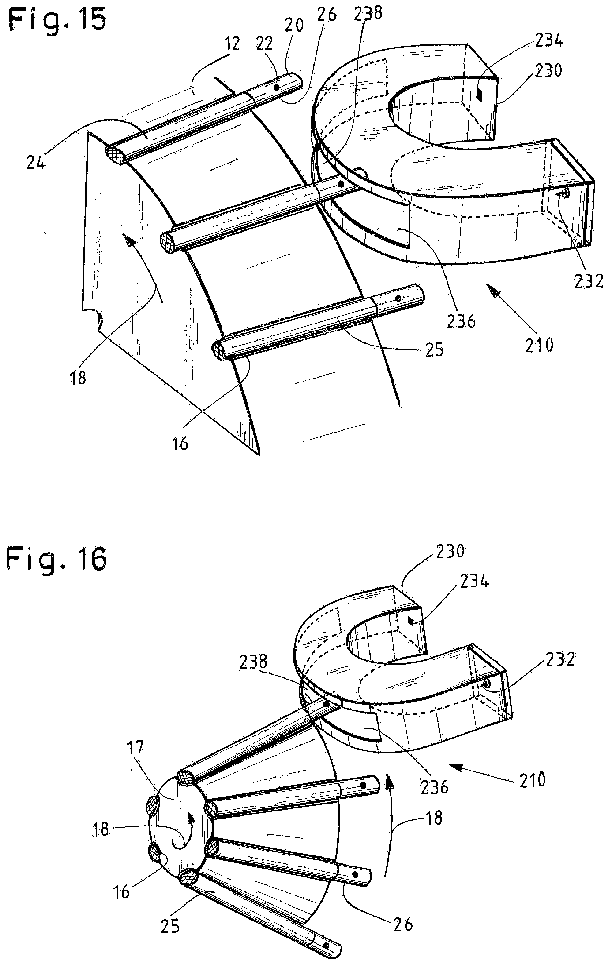

In den Fig. 15 und 16 ist ein weiteres Ausführungsbeispiel einer erfindungsgemäßen Anordnung 210 dargestellt, wobei der Mikrowellenresonator als U-förmiger Resonator 230 bzw. als Hufeisenresonator ausgebildet ist. In diesem Fall bildet der Resonator einen Mikrowellenhohlleiter mit rechteckigem Querschnitt, wobei in einer rechteckigen Endfläche eine Einkopplungsgeometrie, etwa eine Einkopplungsantenne 232 oder eine Lochblende, für das Mikrowellenfeld und an der gegenüberliegenden rechteckigen Endfläche eine Auskopplungsgeometrie, etwa eine Auskopplungsantenne 234 oder eine Lochblende, angeordnet ist. Im zentralen gebogenen Abschnitt der Hufeisenform bzw. des "U" befindet sich eine seitliche Öffnung 236, in die die überstehenden Abschnitte 26 der Zigaretten 25 mit den Filtern 20 und den Kapseln 22 eindringen können. Bei dieser Hohlleiterseite liegen die Wandströme mittig längs zur Biegerichtung, so dass sie durch die Öffnung 236 nicht unterbrochen werden. Die höchste Felddichte befindet sich dabei im Zentrum des rechteckigen Querschnitts, im Maximum der ausgebildeten stehenden Welle durch die der Filter 20 mit der zu untersuchenden Kapsel 22 durchgeführt wird.

Ein Vorteil dieser Anordnung 210 gemäß Fig. 15 liegt in der Möglichkeit, den Resonator über einen gesteuerten variablen Kurzschluss oder über in den Hohlleiter bewegbare Stifte, Stubs, Slides, Schrauben usw. auf verschiedene Materialien abzustimmen und optimal zu koppeln. So wäre beispielsweise auch eine Online-Kalibrierung auf der Maschine möglich, auf der die Anordnung 210 eingesetzt wird.

Die Fig. 15 und 16 unterscheiden sich dadurch, dass in Fig. 15 eine Muldentrommel 12 eingesetzt wird und in Fig. 16 eine Muldenkegeltrommel 17.

Die Seite des Hohlleiters, in dem die Öffnung 236 angeordnet ist, ist in beiden Fällen etwa doppelt so breit wie die Breite der Ober- bzw. Unterseite des U-förmigen Resonators.

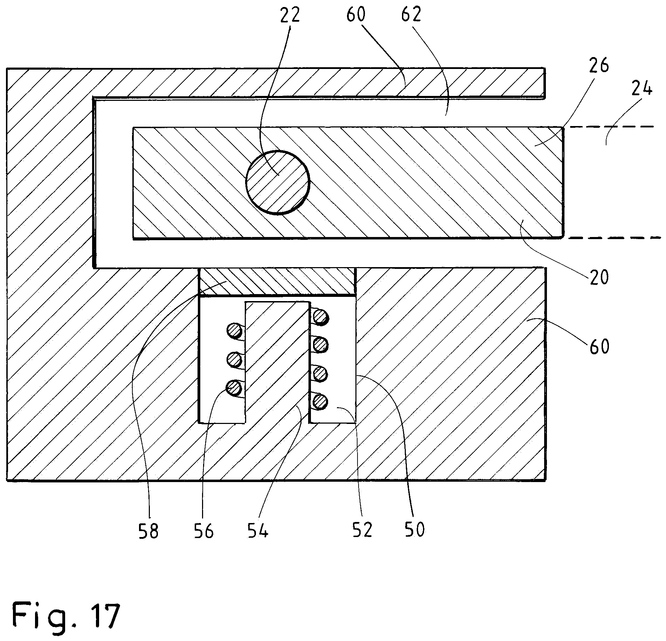

Die Fig. 17 bis 19 zeigen ein weiteres erfindungsgemäßes Ausführungsbeispiel, bei dem ein Helix-Mikrowellenresonator 50 zum Einsatz kommt.

Fig. 17 zeigt eine schematische Querschnittsdarstellung einer Mikrowellen-Messvorrichtung mit dem Helix-Mikrowellenresonator 50 in einer Schnittebene, die in Längsrichtung durch eine queraxial geförderte Zigarette mit Tabakstock 24 und überstehendem Abschnitt 26, einem Filter 20 mit einer Kapsel 22, verläuft. Diese wird queraxial durch einen Durchtrittskanal 62 des Gehäuses 60 der Messvorrichtung gefördert. Dabei wird sie durch den Messbereich des Helix-Mikrowellenresonators 50 gefördert, der einen ringförmigzylindrischen Resonatorraum 52 aufweist, in dessen Zentrum eine zentrale Säule 54 angeordnet ist, ähnlich einem offenen Koaxialresonator. Zusätzlich weist der Helix-Mikrowellenresonator 50 eine helixförmige Wendel 56 auf, die zu einer starken Erhöhung des Gütefaktors des Mikrowellenresonators führt. Der Resonatorraum 52 ist mit einer Schutzkappe 58 aus einem für Mikrowellen durchlässigen Material, vorzugsweise einem Kunststoff, abgedeckt, so dass der Resonatorraum 52 während des Betriebes nicht verschmutzt.

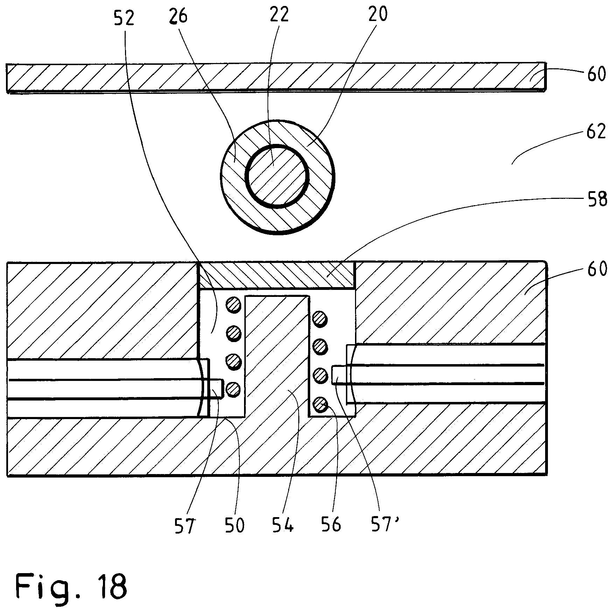

Fig. 18 zeigt eine schematische Schnittdarstellung durch den in Fig. 17 vorgestellten Helix-Mikrowellenresonator 50 und die zugehörige Messvorrichtung in einer Schnittebene, die senkrecht zu der in Fig. 17 gewählten Schnittebene liegt. Diese Schnittebene verläuft quer durch den überstehenden Teil 26 des Filters 20 und die Kapsel 22 sowie durch den Helix-Mikrowellenresonator 50. Der Filter 20 befindet sich in der Darstellung in den Fig. 17 und 18 in der nächsten Annäherung zum Helix-Mikrowellenresonator 50.

Zusätzlich zu den in Fig. 17 dargestellten Elementen sind in Fig. 18 die beiden Antennen, nämlich eine Einkoppelantenne 57 und eine Auskoppelantenne 57' gezeigt, mit denen ein resonantes Mikrowellenfeld im Helix-Mikrowellenresonator 50 angeregt wird. Die Antennen 57, 57' sind mit einer nicht dargestellten Messvorrichtung verbunden. In Fig. 18 ist ebenfalls zu erkennen, dass die Einkoppelantenne 57 und die Auskoppelantenne 57' jeweils unmittelbar benachbart zu einer Wendel der Helix-Wendel 56 enden. Diese Konfiguration ist besonders günstig zur Erzielung eines hohen Gütefaktors. Die dargestellte Konfiguration kann beispielsweise bei einer Mikrowellenfrequenz von 5,58 GHz betrieben werden.

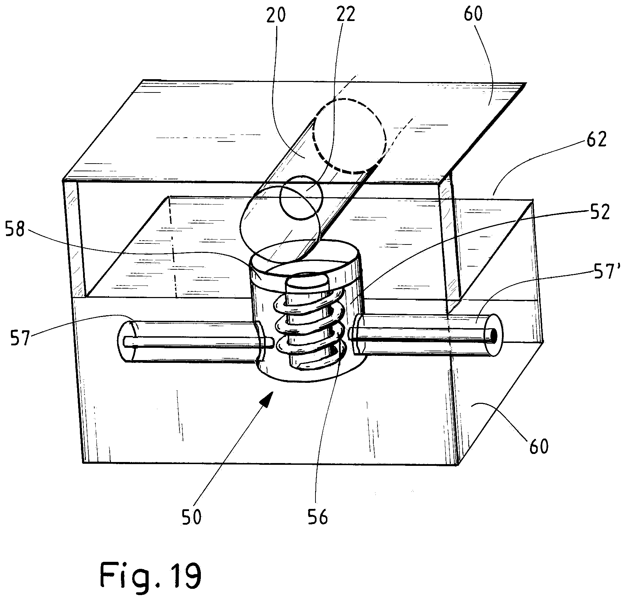

Fig. 19 zeigt eine perspektivische Darstellung eines Ausschnitts aus dem zentralen Teil der entsprechenden Messvorrichtung mit dem Helix-Mikrowellenresonator 50 aus den Fig. 17 und 18. Der Durchtrittskanal 62 ist von drei Seiten mit geraden Wänden umschlossen, während die vierte Seite offen ist. In die offene Seite ragt der Filter 20 hinein. Um Einzelheiten darstellen zu können, sind die Bestandteile des Helix-Resonators 50 transparent dargestellt, wie beispielsweise die Schutzkappe 58, das gesamte Material der Messvorrichtung um den Resonatorraum 52 und den Durchtrittskanal 62 herum, der Filter 20, die Kapsel 22 usw. Die Oberseite der Schutzkappe 58 ist bündig mit der unteren Seitenwand des Durchtrittskanals 62. Die Zigarette bzw. deren Filter 20 ist von der unteren Oberfläche so beabstandet, wie das in den Fig. 17 und 18 gezeigt ist. Die Antennen 57, 57', die jeweils in einer isolierenden Umhüllung eingebettet sind, gehen außerhalb des dargestellten Bereiches weiter.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Kapseleinsatz und erste Kapselprüfung
- 2: Kapselprüfung nach Lagerung
- 3: optionale Multifilterherstellung
- 4: Zigarettenherstellung
- 10: Anordnung
- 12: Muldentrommel
- 14: Muldentrommel
- 15: Drehachse
- 16: Mulde
- 17: Muldenkegeltrommel
- 18: Förderrichtung
- 20: Filter
- 22: Kapsel
- 23: Kapselkammer
- 24: Tabakstock
- 25: Zigarette
- 26: überstehender Abschnitt
- 30, 30': offener Koaxialresonator
- 32: offener Koaxialresonator
- 34: Boden
- 36: Leiter
- 38: Öffnung
- 39, 39': austretendes Mikrowellenfeld
- 40: Resonanzkurve ohne Kapsel
- 42: Resonanzkurve mit Kapsel
- 44: Resonanzverschiebung
- 46: Messfrequenz
- 47: Güte
- 50: Helix-Mikrowellenresonator
- 52: Resonatorraum
- 54: zentrale Säule
- 56: Helix-Wendel
- 57, 57': Ein- und Auskoppelantenne
- 58: Schutzkappe
- 60: Gehäuse
- 62: Durchtrittskanal
- 110: Anordnung
- 130: Mikrowellenresonator
- 132: konkaver Spiegel
- 133: bewegter Spiegel
- 133': Spiegelring
- 134: konkaver Spiegel
- 135: seitliche Öffnung
- 136: Mikrowellenzuleitung
- 138: Mikrowellenableitung
- 140, 142: Öffnung
- 144: Mikrowellenfeld
- 210: Anordnung
- 230: U-förmiger Resonator
- 232: Einkopplungsantenne
- 234: Auskopplungsantenne
- 236: seitliche Öffnung
- 238: Mikrowellenfeld
- d: Distanz
- A: Abstand

## Patentansprüche

1. Anordnung (10, 110, 210) zur Überprüfung von stabförmigen Artikeln (25) der Tabak verarbeitenden Industrie, insbesondere zur Bestimmung eines Flüssigkeitsgehalts von Kapseln (22) in Filtern (20) von Filterzigaretten (25), mit wenigstens einer Muldenfördervorrichtung (12, 14, 17) mit Mulden (16) zur Aufnahme und queraxialen Förderung von stabförmigen Artikeln (25) und wenigstens einer Mikrowellenmessvorrichtung mit wenigstens einem Mikrowellenresonator (30, 30', 32, 130, 230), **dadurch gekennzeichnet, dass** eine oder mehrere Muldenfördervorrichtungen (12, 14, 17) als Muldentrommel (12, 14) oder als Muldenkegeltrommel (17) ausgebildet ist oder sind und der wenigstens eine Mikrowellenresonator (30, 30', 32, 50, 130, 230) wenigstens eine seitliche Öffnung (38, 62, 135, 236) aufweist und zur wenigstens einen Muldenfördervorrichtung (12, 14, 17) so angeordnet ist, dass stabförmige Artikel (25) auf ihrem Förderweg auf der wenigstens einen Muldenfördervorrichtung (12, 14, 17) an einer Stelle einer größten Annäherung an oder eines größten Eintritts in die wenigstens eine seitliche Öffnung (38, 62, 135, 236) sich in einem Wirkbereich eines im Mikrowellenresonator (30, 30', 32, 50, 130, 230) erzeugten Mikrowellenmessfelds (39, 39', 144, 238) befinden, wobei die stabförmigen Artikel (25) bei Durchtritt durch das Mikrowellenmessfeld (39, 39', 144, 238) im Wesentlichen quer zu ihrer Längsachse mit dem Mikrowellenmessfeld (39, 39', 144, 238) beaufschlagt sind.

2. Anordnung (10, 110, 210) nach Anspruch 1, **dadurch gekennzeichnet, dass** an der wenigstens einen Muldenfördervorrichtung (12, 14, 17) und/oder an wenigstens einer zweiten Muldenfördervorrichtung (12, 14, 17) wenigstens eine weitere Mikrowellenmessvorrichtung angeordnet ist, wobei die Mikrowellenmessvorrichtungen zum Betrieb mit der gleichen oder mit verschiedenen Mikrowellenfrequenzen vorgesehen und/oder ausgebildet sind.

3. Anordnung (10, 110, 210) nach Anspruch 1 oder 2, **dadurch gekennzeichnet, dass** wenigstens zwei Mikrowellenresonatoren (30, 30', 32, 50, 130, 230) in längsaxialer Richtung der stabförmigen Artikel (25) nebeneinander oder versetzt zueinander angeordnet sind.

4. Anordnung (10, 110, 210) nach einem der Ansprüche 1 bis 3, **dadurch gekennzeichnet, dass** der Förderweg entlang wenigstens zwei Mikrowellenresonatoren (30, 30', 32, 50, 130, 230) führt, die auf verschiedenen Seiten der stabförmigen Artikel (25) angeordnet sind.

5. Anordnung (10, 110, 210) nach einem der Ansprüche 1 bis 4, **dadurch gekennzeichnet, dass** der wenigstens eine oder wenigstens ein Mikrowellenresonator (30, 30', 32, 50, 130, 230) als offener Koaxialresonator (39, 39'), als Helix-Mikrowellenresonator (50), als Zweispiegel-Resonator (130) oder als im Wesentlichen U-förmiger Resonator (230) mit seitlicher Öffnung (236) im Mittelteil ausgebildet ist.

6. Anordnung (10, 110, 210) nach einem der Ansprüche 1 bis 5, **dadurch gekennzeichnet, dass** eine oder mehrere Muldenfördervorrichtungen (12, 14, 17), die als Muldentrommel (12, 14) oder als Muldenkegeltrommel (17) ausgebildet ist oder sind, unter Verwendung von low-loss-Kunststoff oder low-loss-Kunststoffen und/oder low-loss-Keramik oder low-loss-Keramiken ausgebildet ist oder sind.

7. Anordnung (10, 110, 210) nach einem der Ansprüche 1 bis 6, **dadurch gekennzeichnet, dass** die stabförmigen Artikel (25) in ihren Mulden (16) abschnittsweise über die Muldenfördervorrichtung (12, 14, 17) überstehend angeordnet sind und mit ihrem überstehenden Abschnitt (26) in das Mikrowellenmessfeld (39, 39', 144, 238) eintreten.

8. Anordnung (10, 110, 210) nach einem der Ansprüche 1 bis 7, **dadurch gekennzeichnet, dass** wenigstens ein seitlich offener Mikrowellenresonator (30, 30', 32, 50, 130, 230) innerhalb einer gekrümmten Förderbahn der stabförmigen Artikel (25) angeordnet ist und/oder wenigstens ein seitlich offener Mikrowellenresonator (30, 30', 32, 50, 130, 230) außerhalb einer gekrümmten Förderbahn der stabförmigen Artikel (25) angeordnet ist, wobei die gekrümmte Förderbahn durch die Anordnung der Muldenfördervorrichtung (12, 14, 17) vorgegeben ist.

9. Anordnung (10, 110, 210) nach einem der Ansprüche 1 bis 8, **dadurch gekennzeichnet, dass** ein Mikrowellenresonator (130) wenigstens zwei einander gegenüberliegende Mikrowellen spiegelnde Flächen (132, 133, 134) aufweist, von denen eine Fläche (132) konvex ist und die gegenüberliegende Fläche (133, 134) konvex, plan oder konkav ist, wobei in beiden Flächen (132, 134) jeweils eine Öffnung (140, 142) zur Ein- oder Ausleitung von Mikrowellen angeordnet ist oder in eine der beiden Flächen (132, 133, 134) eine Öffnung (140) zur Einleitung und eine Öffnung (142) zur Ausleitung von Mikrowellen angeordnet sind.

10. Anordnung (10, 110, 210) nach Anspruch 9, **dadurch gekennzeichnet, dass** eine der beiden spiegelnden Flächen (133) auf oder an der Muldenfördervorrichtung (12, 14, 17) angeordnet ist, wobei stabförmige Artikel (25) abschnittsweise auf der spiegelnden Fläche (133) angeordnet sind, wobei eine andere, konvexe, spiegelnde Fläche (132) feststehend außerhalb der Muldenfördervorrichtung (12, 14, 17) angeordnet ist, wobei insbesondere die auf oder an der Muldenförderrichtung (12, 14, 17) angeordnete spiegelnde Fläche (133) wenigstens in einer Richtung konvex ausgebildet ist, wobei insbesondere die konvexe spiegelnde Fläche konzentrisch oder koaxial mit einer Rotationsachse der Muldenfördervorrichtung ausgebildet ist, wobei insbesondere ein Umfangsstreifen der Muldenfördervorrichtung (12, 14, 17) als durchgängige spiegelnde Fläche (133) ausgebildet ist.

11. Maschine der Tabak verarbeitenden Industrie, insbesondere Filteransetzmaschine, mit einer Anordnung (10, 110, 210) nach einem der Ansprüche 1 bis 10.

12. Verfahren zur Überprüfung von stabförmigen Artikeln (25) der Tabak verarbeitenden Industrie, insbesondere zur Bestimmung eines Flüssigkeitsgehalts von Kapseln (25) in Filtern (20) von Filterzigaretten (25), insbesondere in einer Anordnung (10, 110, 210) nach einem der Ansprüche 1 bis 10, wobei stabförmige Artikel (25), insbesondere Filterzigaretten (25), in Mulden (16) wenigstens einer Muldenfördervorrichtung (12, 14, 17), die als Muldentrommel (12, 14) oder als Muldenkegeltrommel (17) ausgebildet ist, queraxial an wenigstens einer Mikrowellenmessvorrichtung mit wenigstens einem Mikrowellenresonator (30, 30', 32, 50, 130, 230) vorbei gefördert werden, **dadurch gekennzeichnet, dass** der wenigstens eine Mikrowellenresonator (30, 30', 32, 50, 130, 230) wenigstens eine seitliche Öffnung (38, 62, 135, 236) aufweist und die stabförmigen Artikel (25) auf ihrem Förderweg auf der wenigstens einen Muldenfördervorrichtung (12, 14, 17) an einer Stelle einer größten Annäherung an oder eines größten Eintritts in die wenigstens eine seitliche Öffnung (38, 62, 135, 236) einen Teil eines im Mikrowellenresonator (30, 30', 32, 50, 130, 230) erzeugten Mikrowellenmessfelds (39, 39', 144, 238) durchlaufen, wobei die stabförmigen Artikel (25) bei Durchtritt durch das Mikrowellenmessfeld (39, 39', 144, 238) im Wesentlichen quer zu ihrer Längsachse mit dem Mikrowellenmessfeld (39, 39', 144, 238) beaufschlagt werden.

13. Verfahren nach Anspruch 12, **dadurch gekennzeichnet, dass** ein Messsignal der wenigstens einen Mikrowellenmessvorrichtung auf das Vorhandensein und/oder eine Befüllung einer Kapsel (22) in einem Filter (20) ausgewertet wird.

14. Verfahren nach Anspruch 12 oder 13, **dadurch gekennzeichnet, dass** Messsignale von wenigstens zwei Mikrowellenmessvorrichtungen, die die Artikel (25) von verschiedenen Seiten quer zur Längsachse der Artikel (25) her mit einem Mikrowellenmessfeld (39, 39', 144, 238) beaufschlagen, auf eine Positionierung einer Kapsel (22) in einem Filter (20), insbesondere eine Exzentrizität einer Kapselposition ausgewertet werden.

15. Verfahren nach einem der Ansprüche 12 bis 14, **dadurch gekennzeichnet, dass** Messsignale von wenigstens zwei Mikrowellenmessvorrichtungen, die in längsaxialer Richtung der Artikel versetzt voneinander angeordnet sind, auf eine Positionierung von Kapseln (22) in längsaxialer Richtung im Filter (20) und/oder eine Befüllung der Kapseln (22) ausgewertet werden, insbesondere durch Vergleich, Differenzbildung und/oder Summenbildung der Messsignale.

## Claims

1. An assembly (10, 110, 210) for examining rod-shaped articles (25) of the tobacco-processing industry, in particular for determining a liquid content of capsules (22) in filters (20) of filter cigarettes (25), with at least one trough conveyor (12, 14, 17) with troughs (16) for holding and conveying rod-shaped articles (25) transverse axially and at least one microwave measuring device with at least one microwave resonator (30, 30', 32, 130, 230), **characterized in that** one or more trough conveyor (12, 14, 17) is or are formed as trough drum (12, 14) or as trough cone drum (17) and the at least one microwave resonator (30, 30', 32, 50, 130, 230) has at least one lateral opening (38, 62, 135, 236) and is positioned with respect to the at least one trough conveyor (12, 14, 17) so that on their conveying path, rod-shaped articles (25) are located on the at least one trough conveyor (12, 14, 17) at a point of closest proximity to or largest entry into at least one lateral opening (38, 62, 135, 236) in an operating area of a microwave measuring field (39, 39', 144, 238) generated in the microwave resonator (30, 30', 32, 50, 130, 230), the microwave measuring field (39, 39', 144, 238) acting on the rod-shaped articles (25) during passage through the microwave measuring field (39, 39', 144, 238) essentially transverse to their longitudinal axis.

2. The assembly (10, 110, 210) according to Claim 1, **characterized in that** at least one further microwave measuring device is located on the at least one trough conveyor (12, 14, 17) and/or on at least one second trough conveyor (12, 14, 17), wherein the microwave measuring devices are provided and/or designed for operation with the same or with different microwave frequencies.

3. The assembly (10, 110, 210) according to Claim 1 or Claim 2, **characterized in that** at least two microwave resonators (30, 30', 32, 50, 130, 230) are arranged beside one another or offset to one another in the longitudinal axial direction of the rod-shaped articles (25).

4. The assembly (10, 110, 210) according to one of Claims 1 to 3, **characterized in that** the conveying path leads along at least two microwave resonators (30, 30', 32, 50, 130, 230), which are located on different sides of the rod-shaped articles (25).

5. The assembly (10, 110, 210) according to one of Claims 1 to 4, **characterized in that** the at least one or at least one microwave resonator (30, 30', 32, 50, 130, 230) is designed as an open coaxial resonator (39, 39'), as a helical microwave resonator (50), as a two-mirror resonator (130), or as an essentially U-shaped resonator (230) with lateral opening (236) in the middle part.

6. The assembly (10, 110, 210) according to one of Claims 1 to 5, **characterized in that** one or more trough conveyor(s) (12, 14, 17) which is or are designed as trough drum (12, 14) or as trough cone drum (17) are formed with the use of low-loss plastic or low-loss plastics and/or low-loss ceramic or low-loss ceramics.

7. The assembly (10, 110, 210) according to one of Claims 1 to 6, **characterized in that** the rod-shaped articles (25) are arranged in their troughs (16) projecting over the trough conveyor (12, 14, 17) in sections and enter the microwave measuring field (39, 39', 144, 238) with their projecting section (26).

8. The assembly (10, 110, 210) according to one of Claims 1 to 7, **characterized in that** at least one laterally open microwave resonator (30, 30', 32, 50, 130, 230) is located within a curved conveying path of the rod-shaped articles (25) and/or at least one laterally open microwave resonator (30, 30', 32, 50, 130, 230) is located outside of a curved conveying path of the rod-shaped articles (25), the curved conveying path being predetermined by the arrangement of the trough conveyor (12, 14, 17).

9. The assembly (10, 110, 210) according to one of Claims 1 to 8, **characterized in that** a microwave resonator (130) has at least two surfaces (132, 133,134) lying opposite one another, which reflect microwaves, one surface (132) of which is convex and the opposite surface (133,134) is convex, flat, or concave, in each case an opening (140, 142) for inlet and outlet of microwaves being located respectively in both surfaces (132, 134) or an opening (140) for inlet and an opening (142) for outlet of microwaves being located in one of the two surfaces (132, 133, 134).

10. The assembly (10, 110, 210) according to Claim 9, **characterized in that** one of the two reflecting surfaces (133) is located on or adjacent to the trough conveyor (12, 14, 17), rod-shaped articles (25) being located in sections on the reflecting surface (133), another convex reflecting surface (132) being located fixed outside the trough conveyor (12, 14, 17), in particular the reflecting surface (133) located on or adjacent to the trough conveyor (12, 14, 17) being made convex at least in one direction, in particular the convex reflecting surface being made concentric or coaxial with a rotation axis of the trough conveyor, in particular a circumferential strip of the trough conveyor (12, 14, 17) being made as a continuous reflecting surface (133).

11. A machine of the tobacco-processing industry, in particular a filter-mounting machine, with an assembly (10, 110, 210) according to one of Claims 1 to 10.

12. A method for examining rod-shaped articles (25) of the tobacco-processing industry, in particular for determining a liquid content of capsules (25) in filters (20) of filter cigarettes (25), in particular in an assembly (10, 110, 210) according to one of Claims 1 to 10, wherein rod-shaped articles (25), in particular filter cigarettes (25), are conveyed transverse axially in troughs (16) of at least one trough conveyor (12, 14, 17) formed as trough drum (12, 14) or as trough cone drum (17) past at least one microwave measuring device with at least one microwave resonator (30, 30', 32, 50, 130, 230), **characterized in that** the at least one microwave resonator (30, 30', 32, 50, 130, 230) has at least one lateral opening (38, 62, 135, 236) and the rod-like article (25) on its conveying path on the at least one trough conveyor (12, 14, 17) at a point of closest proximity to or largest entry into the at least one lateral opening (38, 62, 135, 236) pass through a part of a microwave measuring field (39, 39', 144, 238) generated in the microwave resonator (30, 30', 32, 50, 130, 230), wherein the microwave measuring field (39, 39', 144, 238) acts on the rod-shaped articles (25) during passage through the microwave measuring field (39, 39', 144, 238) essentially transverse to their longitudinal axis.

13. The method according to Claim 12, **characterized in that** a measuring signal of the at least one microwave measuring device is evaluated for the presence and/or filling of a capsule (22) in a filter (20).

14. The method according to Claim 12 or 13, **characterized in that** measuring signals of at least two microwave measuring devices, which act on the articles (25) from different sides transverse to the longitudinal axis of the articles (25) with a microwave measuring field (39, 39', 144, 238), are evaluated for a positioning of a capsule (22) in a filter (20), in particular for an eccentricity of a capsule position.

15. The method according to one of Claims 12 to 14, **characterized in that** measuring signals of at least two microwave measuring devices, which are located offset from one another in the longitudinal direction of the articles, are evaluated for positioning of capsules (22) in the longitudinal axial position in the filter (20) and/or filling of the capsules (22), in particular by comparison, differentiation, and/or summation of the measuring signals.

## Revendications

1. Arrangement (10, 110, 210) de contrôle d'articles (25) en forme de tige de l'industrie de traitement du tabac, notamment pour déterminer une teneur en liquide de capsules (22) dans des filtres (20) de cigarettes à filtre (25), comprenant au moins un dispositif de transport à auges (12, 14, 17) avec des auges (16) destinés à recevoir et à transporter transversalement à leur axe, des articles (25) en forme de tige, et au moins un dispositif de mesure à micro-ondes ayant au moins un résonateur à micro-ondes (30, 30', 32, 130, 230), **caractérisé en ce qu'**un ou plusieurs dispositifs de transport à auges (12, 14, 17) est (ou sont) configuré(s) comme tambour(s) à auges (12, 14) ou comme tambour(s) conique(s) à auges (17) et ledit au moins un résonateur à micro-ondes (30, 30', 32, 50, 130, 230) comporte au moins une ouverture latérale (38, 62, 135, 236) et est disposé par rapport audit au moins un dispositif de transport à auges (12, 14, 17) de façon que des articles (25) en forme de tige se trouvent, sur leur trajet de transport sur ledit au moins un dispositif de transport à auges (12, 14, 17), à un endroit d'une plus grande proximité à ou d'une plus grande entrée dans ladite au moins une ouverture latérale (38, 62, 135, 236), dans une zone de fonctionnement d'un champ de mesure à micro-ondes (39, 39', 144, 238) engendré dans le résonateur à micro-ondes (30, 30', 32, 50, 130, 230), les articles (25) en forme de tige étant soumis au champ de mesure à micro-ondes (39, 39', 144, 238) sensiblement transversalement à leur axe longitudinal lors de leur passage par le champ de mesure à micro-ondes (39, 39', 144, 238).

2. Arrangement (10, 110, 210) selon la revendication 1, **caractérisé en ce qu'**au moins un autre dispositif de mesure à micro-ondes est disposé sur ledit au moins un dispositif de transport à auges (12, 14, 17) et/ou sur au moins un deuxième dispositif de transport à auges (12, 14, 17), les dispositifs de mesure à micro-ondes étant prévus et/ou configurés pour un fonctionnement avec la même fréquence de micro-ondes ou avec des fréquences différentes de micro-ondes.

3. Arrangement (10, 110, 210) selon la revendication 1 ou 2, **caractérisé en ce qu'**au moins deux résonateurs à micro-ondes (30, 30', 32, 50, 130, 230) sont disposés l'un à côté de l'autre ou l'un décalé par rapport à l'autre dans la direction d'axe longitudinal des articles (25) en forme de tige.

4. Arrangement (10, 110, 210) selon l'une des revendications 1 à 3, **caractérisé en ce que** le trajet de transport passe le long d'au moins deux résonateurs à micro-ondes (30, 30', 32, 50, 130, 230) qui sont disposés sur des côtés différents des articles (25) en forme de tige.

5. Arrangement (10, 110, 210) selon l'une des revendications 1 à 4, **caractérisé en ce que** ledit au moins un ou au moins un résonateur à micro-ondes (30, 30', 32, 50, 130, 230) est configuré comme résonateur coaxial ouvert (39, 39'), comme résonateur à micro-ondes hélicoïdal (50), comme résonateur à deux miroirs (130) ou comme résonateur sensiblement en forme d'un U (230) avec une ouverture latérale (236) dans la partie centrale.

6. Arrangement (10, 110, 210) selon l'une des revendications 1 à 5, **caractérisé en ce que** l'un ou les plusieurs dispositifs de transport à auges (12, 14, 17) configuré(s) comme tambour à auges (12, 14) ou comme tambour conique à auges (17) sont configuré(s) en utilisant une matière synthétique à faibles pertes ou des matières synthétiques à faibles pertes et/ou une céramique à faibles pertes ou des céramiques à faibles pertes.

7. Arrangement (10, 110, 210) selon l'une des revendications 1 à 6, **caractérisé en ce que** les articles (25) en forme de tige sont disposés dans leurs auges (16) par zone en dépassement du dispositif de transport à auges (12, 14, 17) et qu'ils pénètrent dans le champ de mesure à micro-ondes (39, 39', 144, 238) par leur zone en dépassement (26).

8. Arrangement (10, 110, 210) selon l'une des revendications 1 à 7, **caractérisé en ce qu'**au moins un résonateur à micro-ondes (30, 30', 32, 50, 130, 230) latéralement ouvert est disposé à l'intérieur d'un trajet arqué de transport des articles (25) en forme de tige et qu'au moins un résonateur à micro-ondes (30, 30', 32, 50, 130, 230) latéralement ouvert est disposé à l'extérieur d'un trajet arqué de transport des articles (25) en forme de tige, le trajet arqué de transport étant prédéterminé par la disposition du dispositif de transport à auges (12, 14, 17).

9. Arrangement (10, 110, 210) selon l'une des revendications 1 à 8, **caractérisé en ce qu'**un résonateur à micro-ondes (130) comprend au moins deux surfaces en regard (132, 133, 134) réfléchissant des micro-ondes, dont une surface (132) est convexe et dont la surface en regard (133, 134) est convexe, plane ou concave, une ouverture (140, 142) respective pour l'entrée ou la sortie de micro-ondes étant disposée dans les deux surfaces (132, 134) ou une ouverture (140) pour l'entrée et une ouverture (142) pour la sortie de micro-ondes étant prévues dans une des deux surfaces (132, 133, 134).

10. Arrangement (10, 110, 210) selon la revendication 9, **caractérisé en ce qu'**une des deux surfaces réfléchissantes (133) est disposée sur ou près du dispositif de transport à auges (12, 14, 17), des articles (25) en forme de tige étant disposés par zones sur la surface réfléchissante (133), une autre surface réfléchissante (132), convexe, étant disposée en position fixe à l'extérieur du dispositif de transport à auges (12, 14 , 17), la surface réfléchissante (133) disposée sur ou près du dispositif de transport à auges (12, 14, 17), notamment, étant configurée de façon convexe dans une direction, la surface réfléchissante convexe, notamment, étant configurée de façon concentrique ou coaxiale par rapport à un axe de rotation du dispositif de transport à auges, une bande circonférentielle du dispositif de transport à auges (12, 14, 17), notamment, étant configurée comme surface réfléchissante continue (133).

11. Machine de l'industrie de traitement du tabac, notamment machine pour raccorder des filtres, avec un arrangement (10, 110, 210) selon l'une des revendications 1 à 10.

12. Procédé de contrôle d'articles (25) en forme de tige de l'industrie de traitement du tabac, notamment pour déterminer une teneur en liquide de capsules (22) dans des filtres (20) de cigarettes à filtre (25), notamment dans un arrangement (10, 110, 210) selon l'une des revendications 1 à 10, des articles (25) en forme de tige, notamment des cigarettes à filtre (25), étant transportés transversalement à leur axe dans des auges d'au moins un dispositif de transport à auges (12, 14, 17) étant configuré(s) comme tambour(s) à auges (12, 14) ou comme tambour(s) conique(s) à auges (17) devant au moins un dispositif de mesure à micro-ondes ayant au moins un résonateur à micro-ondes (30, 30', 32, 50, 130, 230), **caractérisé en ce que** ledit au moins un résonateur à micro-ondes (30, 30', 32, 50, 130, 230) comporte au moins une ouverture latérale (38, 62, 135, 236) et que les articles (25) en forme de tige passent, sur leur trajet de transport sur ledit au moins un dispositif de transport à auges (12, 14, 17), à un endroit d'une plus grande proximité à ou d'une plus grande entrée dans ladite au moins une ouverture latérale (38, 62, 135, 236), une partie d'un champ de mesure à micro-ondes (39, 39', 144, 238) engendré dans le résonateur à micro-ondes (30, 30', 32, 50, 130, 230), les articles (25) en forme de tige étant soumis, lors de leur passage par le champ de mesure à micro-ondes (39, 39', 144, 238), sensiblement transversalement à leur axe longitudinal, au champ de mesure à micro-ondes (39, 39', 144, 238).

13. Procédé selon la revendication 12, **caractérisé en ce qu'**un signal de mesure dudit au moins un dispositif de mesure à micro-ondes est exploité sous l'aspect de la présence et/ou d'un taux de remplissage d'une capsule (22) dans un filtre (20).

14. Procédé selon la revendication 12 ou 13, **caractérisé en ce que** des signaux de mesure d'au moins deux dispositifs de mesure à micro-ondes qui soumettent les articles (25), de deux côtés différents, transversalement à l'axe longitudinal des articles (25), à un champ de mesure à micro-ondes (39, 39', 144, 238), sont exploités sous l'aspect d'un positionnement d'une capsule (22) dans un filtre (20), notamment d'une excentricité d'une position de capsule.

15. Procédé selon l'une des revendications 12 à 14, **caractérisé en ce que** des signaux de mesure d'au moins deux dispositifs de mesure à micro-ondes qui sont disposés de façon décalée l'un par rapport à l'autre dans la direction de l'axe longitudinal des articles, sont exploités sous l'aspect d'un positionnement de capsules (22) dans le filtre (20) dans la direction de l'axe longitudinal et/ou d'un taux de remplissage des capsules (22), et cela notamment par comparaison, par soustraction et/ou par addition des signaux de mesure.
